# EUROPEAN PATENT APPLICATION

(11) **EP 0 920 210 A1**
(43) Date of publication of application: **02.06.1999**
(21) Application number: 98309238.8
(22) Date of filing: 11.11.1998
(51) Int. Cl.: H04N 7/18

(54) **Remote monitoring and security system and method**

(30) Priority: 21.11.1997 JP 320853/97
(71) Applicant: Deguchi, Kazuya, Kyoto 619-1106 (JP)
(72) Inventor: Deguchi, Kazuya, Kyoto 619-1106 (JP)
(74) Representative: Crawford, Andrew Birkby

(57) **Abstract**

The present invention relates to a system allowing remote visual monitoring of a first location and remote monitoring of the conditions of various types of sensors at a first location by a user at a second location via a standard telephone line, one or more wireless telephones, or an ISDN telecommunications link. The system combines the features of three devices: a sensor-responsive automatic telephone notification device, an automatic telephone response device, and a touch-tone phone remote control device or voice actuated remote device. The system allows a user at a remote location to control electrical devices at a first location in response to the conditions of sensors at the first location and in response to a video display of the first location.

## Description

### BACKGROUND OF THE INVENTION

The invention disclosed herein relates generally to remote monitoring and security systems. More particularly, the present invention relates to a remote monitoring and security system and method that allows a user to remotely monitor a location and remotely activate various electrical devices at the location.

Several factors, including rising crime rates, the growing number of families in which both parents work during the day, and a growing popularity of longer vacations away from home, have contributed to the greater frequency with which homes, offices, and stores are left unattended. Similarly, the growing number of elderly people living alone has contributed to the need to remotely monitor various locations. Such monitoring of unattended locations or locations with elderly or infirm people would be enhanced by the ability to remotely control electrical appliances at the various locations. However, as explained below, there is a lack of satisfactory security systems.

In one current system, for example, a video camera monitors a home, business, or other location, and is attached to a personal computer at the location. The personal computer is connected to the Internet or to another computer network. Users monitor their homes, offices, or businesses from remote locations by using a second personal computer located at a remote location and connected to the same network as the first computer to receive a video signal transmitted from the video camera at the monitored site. This technology requires at least two personal computers, two modems or other devices for connecting the computers to the network, and a monitoring camera, and requires complicated computer operations to accomplish the monitoring.

In another current system, a third-party such as a security firm or private agent monitors a location. This is very expensive as it requires a person to watch the monitored location 24 hours per day. This also raises privacy concerns. Furthermore, third-parties cannot be expected to respond to every type of possible alarm, e.g., gas leak alarms, smoke and fire alarms, carbon monoxide alarms, unlawful entry alarms, etc. Likewise, third-parties can not be expected to monitor latch-key children or sick or elderly people, nor to communicate with them as appropriate.

Still other systems do not rely on third-parties but rely instead on the installation of various sensors such as fire alarms. However, these systems lack the ability to properly handle device malfunctions when no one is present at the monitored location. In such cases, generally the only way to handle the situation is to rely on the police, the fire department, neighbors, or the like; however, the responses of these sources of assistance may not always be quick or appropriate.

In addition, there are currently devices that use touch-tone phones to remotely control light switches, air conditioners, and other electrical devices or appliances. However, the inventor is not currently aware of any system that provides remote visual confirmation of the remote operations of such devices and appliances. Thus, malfunctions of the devices and appliances may go unnoticed and uncorrected.

As a result, the current remote surveillance or monitoring devices, automatic telephone notification or response devices, and remote control devices fail to provide all the features which are important for the effective monitoring of and control over a remote location. There is thus a need for a remote monitoring and security system that provides the advantages of remote video monitoring, remote sensing, remote control of electrical devices, and automatic notification into one inexpensive and easy to use system.

Many of the above problems are also associated with mobile locations such as cars, truck and boats.

### BRIEF SUMMARY OF THE INVENTION

The present invention provides a remote monitoring and security system that allows remote monitoring and control of a monitored site via a communications link, using a video phone, sensors, such as fire, smoke, and motion sensors, an automatic telephone notification device, and controllable electrical devices. The system may include a video cassette recorder to videotape the conditions at the monitored site. Further, the system may include a UHF transmitter for broadcasting a video image of the monitored site. Additionally, the system may be secured via passwords or access codes.

An advantage of this system is that it provides remote video monitoring, remote sensing, remote control of electrical devices, and automatic notification in one easy-to-use and inexpensive system.

A further advantage is that it provides automatic notification to a remote site when certain conditions exist at a monitored location.

### BRIEF DESCRIPTION OF THE DRAWINGS

The invention is illustrated in the figures of the accompanying drawings which are meant to be exemplary and not limiting, in which like references refer to like or corresponding parts, and in which:
Figs. 1A and 1B contain block diagrams showing the remote monitoring and security system of one preferred embodiment of the present invention; and
Fig. 2 contains a block diagram showing the components of one preferred embodiment of a remote monitoring and security adapter of the system shown in Fig. 1A.

### DETAILED DESCRIPTION OF THE PREFERRED EMBODIMENTS

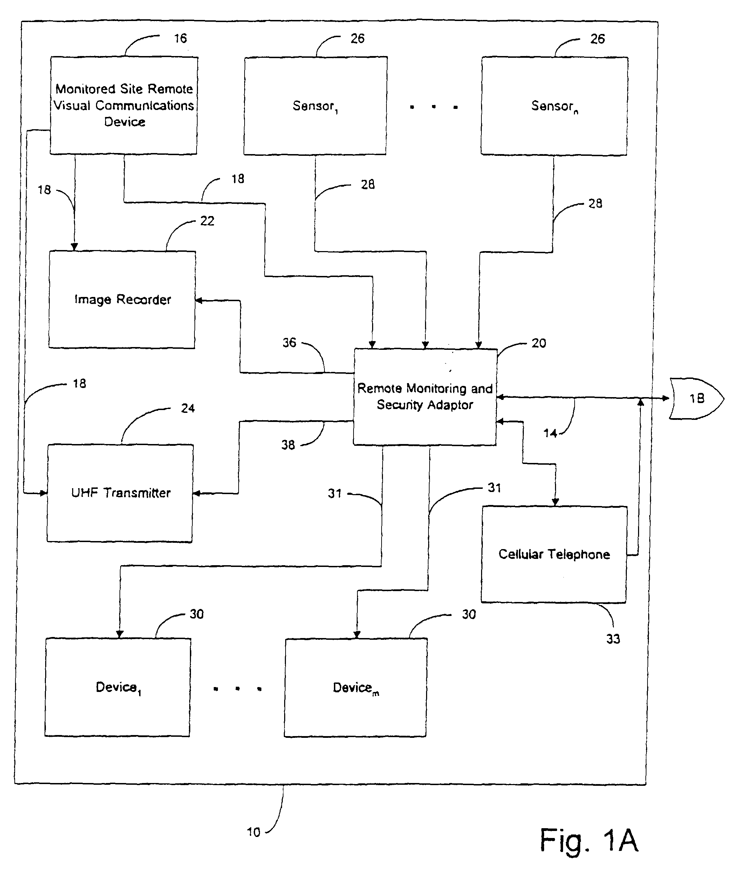

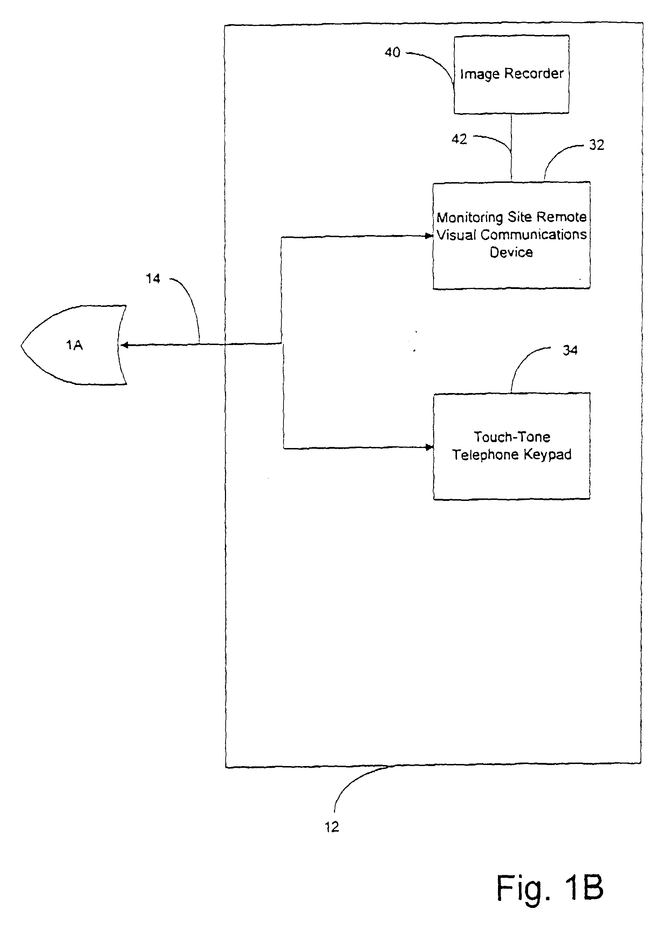

With reference to Figs. 1A and 1B, one preferred embodiment of the invention includes a monitored site 10 (shown in Fig. 1A), a monitoring site 12 (shown in Fig. 1B), and a communications link 14 coupling the monitored site I O and the monitoring site 12. The communications link 14 can be a standard, publicly-switched telephone line, an ISDN line, or other conventional communication medium such as optical fiber, satellite, microwave, etc. The communications link 14 can provide for a mobile telephone to be used at either the monitored site 10 or the monitoring site 12, or both.

At the monitored site 10, a remote visual communications device 16, such as a commercially available video phone, is installed. The remote visual communications device 16 may include a video camera portion, a digital still-camera portion, an infra-red camera portion, or other system having visual output. The lens of such portion of the remote visual communications device 16 is focused on the part of the monitored site 10 that is to be monitored. The remote visual communications device 16 has an output 18 which is coupled to a remote monitoring and security adapter 20 located at the monitored site 10, described in greater detail below. The output 18 of the remote visual communications device 16 may also be coupled to a digital image recorder or commercially available video cassette recorder 22 and/or a UHF transmitter 24 or other wireless video transmitter. If a video cassette recorder is used, it is preferably computer-controllable, such as the Panasonic AJ-D230 video cassette recorder, available from Matsushita Electric Corporation of America, Secaucus, NJ.

Also present at the monitored site 10 are one or more sensors 26. The sensors 26 can be such sensing devices as smoke sensors, fire sensors, natural gas sensors, infra-red intrusion sensors, ultrasonic motion sensors, and the like. The sensors 26 have outputs 28 coupled to the remote monitoring and security adapter 20. The remote monitoring and security adapter 20 is coupled to the control input 36 of the video cassette recorder 22, if present, and to the control input 38 of the transmitter 24, if present.

Also present at the monitored site 10 are one or more electrical devices 30. The electrical devices 30 can be such electrical devices as light switches, alarm bells, air conditioners, video cassette recorders, and the like. The electrical devices 30 have control inputs 31 coupled to the remote monitoring and security adapter 20.

At the monitoring site 12 (shown in Fig. 1B), there is a remote visual communications device 32, such as a commercially available video phone, coupled to the communications link 14. Also at the monitoring site 12 is a touch-tone phone keypad 34 coupled to the communications link 14. Optionally, there can be a digital image recorder or video cassette recorder 40 at the monitoring site for recording the video signal from the monitored site 10. If a digital image recorder or video cassette recorder 40 is present at the monitoring site 12, the digital image recorder or video cassette recorder at the monitoring site 40 is coupled to the video output connection 42 of the monitoring site remote communications device 32.

In one mode of operation, when one of the sensors 26 at the monitored site 10 detects a reportable condition (e.g., when a smoke sensor senses smoke), the output 28 of the sensor 26 changes state, thereby signaling a condition to the remote monitoring and security adapter 20. The remote monitoring and security adapter 20 then sends a signal to a phone to place a call using the communications link 14. The remote monitoring and security adapter 20 is programmed with a series of telephone numbers to dial in the event of a reportable condition, as signaled by one or more of the sensors 26. The remote monitoring and security adapter 20 can be programmed to dial a given phone number depending upon which of the *n* sensors 26 has detected a reportable condition, if the prior dialed number is not answered.

Similarly, the remote monitoring and security adapter 20 can be programmed to stop calling phone numbers once a successful connection is established, or can be programmed to continue calling the series of numbers it has been programmed with.

Once the remote monitoring and security adapter 20 has been signaled by one or more sensors 26 that there is a reportable condition, the remote monitoring and security adapter 20 switches on the monitored site remote visual communications device 16 and, optionally, the digital image recorder or video cassette recorder 22 and, optionally, the transmitter 24. Alteratively, the remote monitoring and security adapter 20 can be programmed to not switch on the monitored site remote visual communications device 16, the digital image recorder or video cassette recorder 22, or the transmitter 24 until the remote monitoring and security adapter 20 receives a proper, pre-selected security code from the monitoring site remote visual communications device 32 or remote site touch-tone telephone keypad 34 and a communications link is established.

Similarly, the remote monitoring and security adapter 20 car switch on or off one or more of the m devices 30. The logic of which devices 30 to switch on or off depending upon which sensors 26 have signaled a reportable condition is programmed into the remote monitoring and security adapter 20, by the user, the manufacturer, or the installer of the system. Alternatively, the remote monitoring and security adapter 20 can switch devices 30 on or off depending upon codes received from the monitoring site remote visual communications device 32.

When the remote monitoring and security adapter 20 places a phone call on the communications link 14 to the monitoring site 12, the monitoring site remote visual communications device 32 connects with the remote monitoring and security adapter 20. The remote monitoring and security adapter 20 signals to the monitoring site remote visual communications device 32 the condition of the sensors 26 and transmits the video image output 18 of the monitored site remote visual communications device 16. Alternatively, the remote monitoring and security adapter 20 can signal the condition of the sensors 26 through the use of either unique audio tones or voice synthesis which is transmitted to the monitoring site 12 via the communications link 14. Alteratively, the remote monitoring and security adapter 20 can wait for a pre-selected security code to be transmitted by the monitoring site remote visual communications device 32 or monitoring site touch-tone keypad 34 before signaling the condition of the sensors 26 or before transmitting the video image output 18 of the monitored site remote visual communications device 16. A user at the monitoring site 12 can use a touch-tone telephone keypad 34 to submit a series of codes to the remote monitoring and security adapter 20. These codes instruct the remote monitoring and security adapter 20 whether to turn any of the devices 30 on or off, whether to turn the monitored site video remote visual communications device 16 on or off, whether to signal the digital image recorder or video cassette recorder 22 to begin recording, and whether to signal the transmitter 24 to transmit the video image output 18 of the monitored site remote visual communications device 16.

Once apprised of the condition of the sensors 26 at the monitored site 10, the user at the monitoring site 12 can choose to go to the monitored site 10 or can instruct others (e.g., fire department, police department, etc.) to go to the monitored site 10. The action of the user will be based on the type of sensor 26 which has signaled a reportable condition as well as the observations of the monitored site 10 by the user at the monitoring site 12 via the monitoring site remote visual communications device 32

In another mode of operation, a user at the monitoring site 12 can place a call to the remote monitoring and security adapter 20 in order to check conditions at the monitored site 10 or to remotely control one or more devices 30 at the monitored site 10. The remote monitor and security adapter 20 can be programmed such that it will not signal the condition of the monitored site 10 to the monitoring site 12 until a pre-selected security code has been entered by the remote user through the monitoring site remote visual communications device 32 or the monitoring site touch-tone telephone keypad 34.

In another mode of operation, a user at the monitoring site 12 can not succeed in accessing the remote monitoring and security adapter 20 by using the monitoring site remote visual communications device 32 due to interference or other connection problems. In such a case, the user can call the remote monitoring and security adapter 20 using a standard touch-tone telephone. After a connection has been established and the user has entered a pre-selected security code to gain access to the remote monitoring and security adapter 20, if required, the user can switch devices 30 on and off in the same manner as in the other modes of operation using a touch-tone telephone keypad 34. In this mode of operation, the user is unable to view the output 18 of the monitored site remote communications device 16. The remote monitoring and security adapter 20 can signal the condition of the sensors 26 through the use of either unique audio tones or voice synthesis which are transmitted via the communications link 14.

In yet another mode of operation, the adapter 20 may be used for teleconferencing applications.

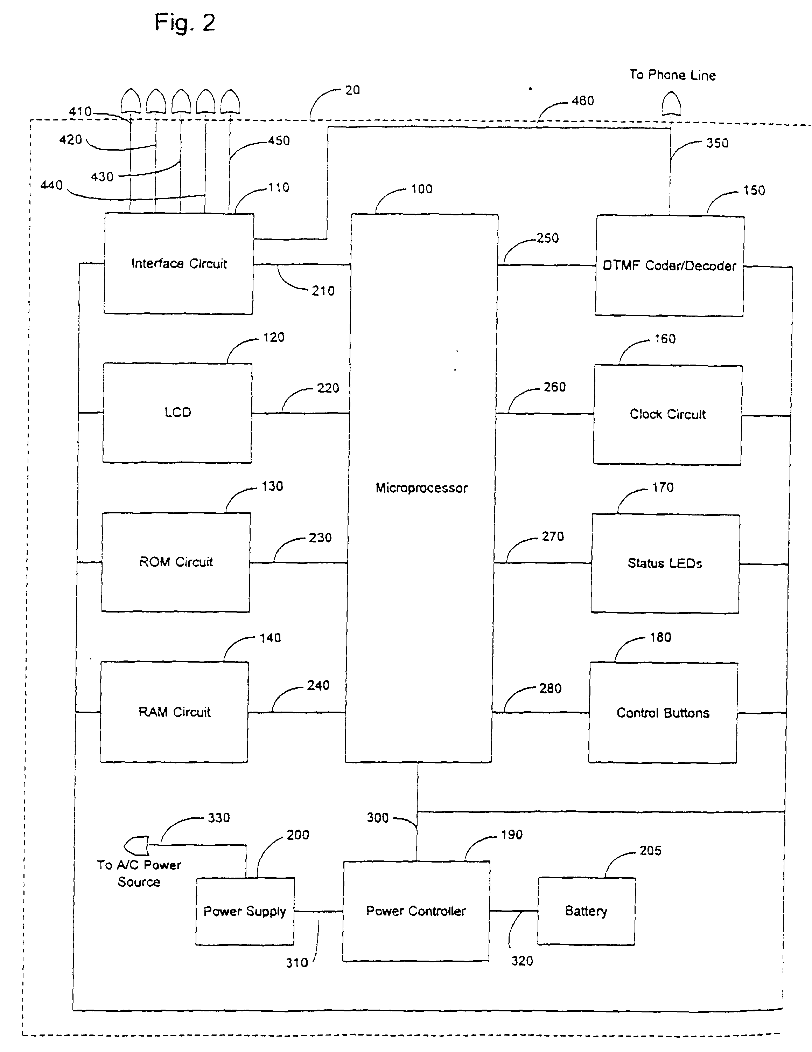

One preferred embodiment of the remote monitoring and security adapter is shown in Fig. 2. The adapter 20 includes a microprocessor 100, such as the TMPZ84CO11BF-6 microprocessor available from Toshiba America Electronic Components, Inc., Irvine, CA, or any of the micro-controllers available from Intel Corporation, Santa Clara, CA. The microprocessor 100 is coupled to an interface circuit 110, a liquid-crystal display (LCD) 120, a read-only memory (ROM) circuit 130, a random-access memory (RAM) circuit 140, a dual tone multi-frequency (DTMF) coder/decoder circuit 150, a clock circuit 160, one or more status-signaling light-emitting diodes (LEDs) 170, one or more control buttons 180, and a power controller 190.

The interface circuit 110 is coupled to the microprocessor 100 via connection 210, to the sensors 26 via connection 410, to the monitored site visual communications device 16 via connection 420, to the monitored site video cassette recorder 22 via connection 430, to the transmitter 24 via connection 440, and to the devices 30 via connection 450. The interface circuit 110 is also coupled to the telephone line connection 350 via connection 460. This permits the interface circuit 110 to couple the video signal output 1 8 of the monitored site remote visual communications device 16 to the telephone line connection 350. The phone line connection 350 may be to a standard residential telephone line, standard business telephone line, or to a cellular telephone line to permit wireless communication. In this way, a user at the monitoring site 12 can view the video signal generated by the monitored site remote visual communications device 16 on the monitoring site remote visual communications device 32.

Thus, if the remote monitoring and security adapter 20 receives a signal from one or more of the sensors 26, the remote monitoring and security adapter may place a call on the telephone line to the monitoring site 12. Similarly, the remote monitoring and security adapter 20 is capable of receiving a call from the monitoring site 12 such that a user at the monitoring site 12 can check the status of the remote monitoring and security adapter 20.

In a preferred embodiment, the telephone line interface circuit 150 is coupled to both a standard, wired telephone line as well as to a cellular telephone. If a reportable condition exits at the monitored site 10, the remote monitoring and security adapter 20 attempts to place a call to the monitoring site 12 using the standard telephone line. If the remote monitoring and security adapter 20 is unable to get a dial tone from the standard telephone line, the remote monitoring and security adapter 20 switches to the cellular phone connection and attempts to dial the monitoring site 12 using the cellular phone connection.

In one preferred embodiment of the present invention, the interface circuit 110 comprises circuitry compatible with wireless electrical control devices, such as lamp modules (model no. LM465), wall receptacle modules (model no. SR227) wall switch modules (model no. WS467), and appliance modules (model no. AM466) available from X-10 (USA) Inc., Closter, NJ.

In one preferred embodiment of the invention, the LCD 120 displays the current condition and settings of the remote monitoring and security system. The LCD 120 also facilitates the user's set-up and programming of the remote monitoring and security system by displaying the current values of those settings which the user can adjust.

In one preferred embodiment of the invention, the ROM circuit 130 is preprogrammed with the instructions necessary to permit the microprocessor 100 to operate as described herein. The ROM circuit 130 preferably contains 32K of memory.

In one preferred embodiment of the invention, the RAM circuit 140 is used to store the current condition of the sensors and the user-adjustable values of the remote monitoring and security system. The RAM circuit 140 preferably contains 32K of memory.

In one preferred embodiment of the invention, the DTMF coder/decoder circus. 150 is coupled to the microprocessor 100 via connection 250, to the phone line via connection 350 and to the power controller 190 via connection 300.

The clock circuit 160 is coupled to the microprocessor 100 via connection 160 and supplies the clock pulse required by the microprocessor 100.

One or more LEDs 170 are coupled to the microprocessor 100 via connection 270 to signal the condition of the remote monitoring and security adapter 20. Preferably, the remote monitoring and security adapter 20 includes two LEDs 170 used in combination to signal the condition of the remote monitoring and security adapter 20.

One or more control buttons 180 are coupled to the microprocessor 100 via connection 280. Preferably, the remote monitoring and security adapter 20 includes three control buttons 180: one for increasing the value of user-adjustable settings; one for decreasing the value of user-adjustable settings; and one for selecting which user-adjustable setting to adjust.

A power controller 190 is coupled to a power supply 200 and to a battery 205. The power supply 200 is coupled to an alternating current power source, such as a wall outlet, via connection 330. The power supply 200 rectifies and regulates the alternating current power source and supplies the rectified and regulated current to the power controller 190 via connection 310. The power controller 190 monitors a current and voltage supplied by power supply 310. While the current and voltage supplied by the power supply 310 is sufficient to run the remote monitoring and security adapter 20, the power controller 190 couples the voltage from the power supply 200 to the components of the remote monitoring and security adapter 20. If the voltage or current supplied by the power supply 200 is insufficient to power the components of the remote monitoring and security adapter 20, the power controller 190 switches the remote monitoring and security adapter's power source to the battery 205, which is coupled to the power controller 190 via connection 320. When the current and voltage supplied by the power supply 200 is again sufficient to power the components of the remote monitoring and security adapter 20, the power controller 190 switches the remote monitoring and security adapter's power source to the power supply 200.

While the invention has been described and illustrated in connection with preferred embodiments, many variations and modifications as will be evident to those skilled in this art can be made without departing from the spins and scope of the invention. For example, a single remote monitoring and security adapter 20 may be used to monitor several locations, for example within one building or several buildings. As one skilled in the art will recognize, the adapter 20 would include additional programming to allow for user selection of which location to monitor by receiving the video signals corresponding to that location and transmitting control signals to that location. Similarly, the adapter 20 may be used by several users to monitor a single location with similar modifications to allow selection among multiple users. The invention is thus not to be limited to the precise details of methodology or construction set forth above, as such variations and modification are intended to be included within the scope of the invention.

Further modifications can be made. For example digital communication links can be utilized and the mobile telephone may be a cellular telephone or one based on satellite technology. Also, because the apparatus at the monitored location may be battery operated, it is possible for the monitored location to be mobile such as a truck, car or boat. As an alternative or in addition, there can be voice actuated remote control.

Power for the system can be derived from the alternating means at 110-120 volts or 220-240 volts depending on the standards prevailing in the location. As with many security systems, if the alternating supply ceases to be available for any reason, such as tampering with the supply, the apparatus will automatically switch to an internal DC power pack e.g. in the form of rechargeable batteries.

In summary, from one aspect the above described embodiment provides an apparatus for allowing remote monitoring and control of a first site from a second site, the apparatus comprising:
a sensor-responsive automatic telephone notification device for receiving signals from sensors and establishing a communications link with the second site in response to the signals received from the sensors; and
a remote control device for allowing remote control via the communications link of electrical devices located at the first site.

More particularly, the embodiment provides an apparatus for allowing remote monitoring and control of a first site from a second site, the apparatus comprising:
a sensor-responsive automatic telephone notification device for receiving signals from sensors and establishing a communications link with the second site in response to the signals received from the sensors;
means for controlling a remote visual communications device for allowing remote visual monitoring of the first site via the communications link; and
a remote control device for allowing remote control via the communications link of electrical devices located at the first site.

From another aspect the above described embodiment provides a method for remotely monitoring and controlling a first site from a second site, the method comprising the steps of:
receiving signals from sensors located at the first site;
notifying a user located at the second site of the signals received from the sensors located at the first site;
transmitting video information from the first site to the second site so the user may thereby monitor conditions at the first site; and
receiving signals from the user for controlling one or more electrical devices, the one or more electrical devices located at the first site.

## Claims

1. A system for allowing remote monitoring and control of a first site from a second site, the first site and second site connected via a communications link the system comprising:
a remote visual communications device located at the first site;
one or more sensors located at the first site;
an automatic telephone notification device coupled to the remote visual communications device, the one or more sensors, the communications link, and one or more electrical devices controllable by the automatic notification device.

2. The system of claim 1 comprising a remote visual communications device located at the second site.

3. The system of claim 1 or 2 wherein the one or both remote visual communications device is a video phone.

4. The system of claim 1 wherein one of the electrical devices controllable by the automatic notification device comprises a digital image recorder.

5. The system of claim 1 wherein one of the electrical devices controllable by the automatic notification device comprises a video cassette recorder.

6. The system of claim 1 wherein one of the electrical devices controllable by the automatic notification device comprises a wireless video image transmitter.

7. The system of claim 1 wherein one of the electrical devices controllable by the automatic notification device comprises a UHF transmitter.

8. The system of claim 1 wherein the automatic notification device is capable of controlling the electrical devices based on signals received via the communications link.

9. The system of claim 1 wherein the automatic notification device is capable of controlling a electrical devices based on the condition of the one or more sensors.

10. The system of claim 1 wherein the automatic notification device is capable of communicating the condition of the one or more sensors via the communications link to a user at the second site.

11. The system of claim 1 wherein the automatic notification device requires a valid security code to be entered before allowing remote monitoring or remote control of the first site.

12. The system of claim 1 wherein the communications link comprises a wireless communications link.

13. The system of claim 1 wherein the communications link comprises a wireless communications link and a wired communications link
